# EUROPEAN PATENT SPECIFICATION

(11) **EP 3 097 236 B1**
(45) Date of publication and mention of the grant of the patent: **14.12.2022**
(21) Application number: 15758918.5
(22) Date of filing: 15.01.2015
(51) Int. Cl.: E02D 27/42, E04H 12/22, C08G 18/48, C08G 101/00

(54) **POLYURETHANE FOAM IN FOUNDATION FOOTINGS FOR LOAD-BEARING STRUCTURES**
POLYURETHANSCHAUM IN GRÜNDUNGSSOHLEN FÜR LASTTRAGENDE STRUKTUREN
MOUSSE POLYURÉTHANE DANS LES SEMELLES DE FONDATION DE STRUCTURES PORTEUSES

(30) Priority: 17.01.2014 US 201461928453 P
(43) Date of publication of application: 30.11.2016
(73) Proprietor: Royal Adhesives & Sealants Canada Ltd., Toronto, ON M5H 3S1 (CA)
(72) Inventor: BOTRIE, Alexander, Toronto, ON M5E IT4 (CA); GOODMAN, Neil, Brampton, ON L6S 4E5 (CA)
(74) Representative: Manitz Finsterwald Patent- und Rechtsanwaltspartnerschaft mbB
(86) International application number: PCT/IB2015/001032
(87) International publication number: WO 2015/132674

(56) References cited:
- US-A- 3 403 520
- US-A- 3 968 657
- US-A- 3 968 657
- US-A- 4 966 497
- US-A1- 2013 036 689

## Description

### FIELD OF THE INVENTION

The invention relates to foundation footing systems for load-bearing structures and use of polyurethane compositions for preparing such foundation footing systems.

### BACKGROUND OF THE INVENTION

A firm foundation is essential to good performance of buildings and other load- bearing structures. The foundation includes properly installed footings of adequate size to support a structure and prevent excessive settling. Foundation systems are classified as shallow and deep foundations, depending on the depth of the load-transfer member below the super-structure and the type of transfer load mechanism. The required foundation system depends on several factors or conditions such as the strength and compressibility of the site soils, the proposed loading conditions, and the project performance criteria (i.e. total settlement and differential settlement limitations.)

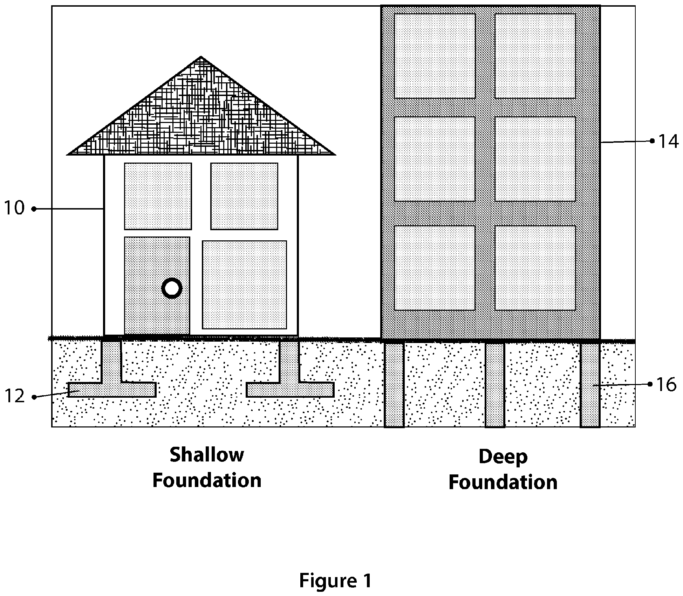

In construction sites where settlement is not a problem, shallow foundations provide the most economical systems. Shallow foundations are typically placed from ground level to 3 meters below ground level or below the frost line. Shallow foundation construction is typically utilized for most residential and light commercial raised floor building sites. Figure 1, building structure 10 is built on shallow foundation 12. The shallow foundation may be of any suitable shape such as the inverted "T" shape shown. This shape allows more stability.

Where poor soil conditions are found, deep foundations may be needed to provide the required load-bearing capacity and to limit settlement. In Figure 1, building structure 14 is built on a deep foundation 16. Examples of deep foundation systems include driven piles (i.e. pressure-treated timber piles, concrete, or steel), drilled shafts, or micro piles.

Foundation specifications, including footing requirements, are covered in various building codes, and sized in accordance with the building capacity of the soil and the weight of the building. In areas subject to seasonal frost, the bottom of the footing must be placed below the frost line to prevent damage to the footing and structure due to frost heave.

A raised foundation is a foundation which is raised above the plane of the surrounding earth. The main floor of a home or business is built on this foundation. A post and pier foundation system is one example of a raised system. Poured concrete footings are often used in raised foundations. In one example, a wood, metal, plastic, or composite post is set in the ground with concrete and bears the weight of the structure on it. The post is below grade.

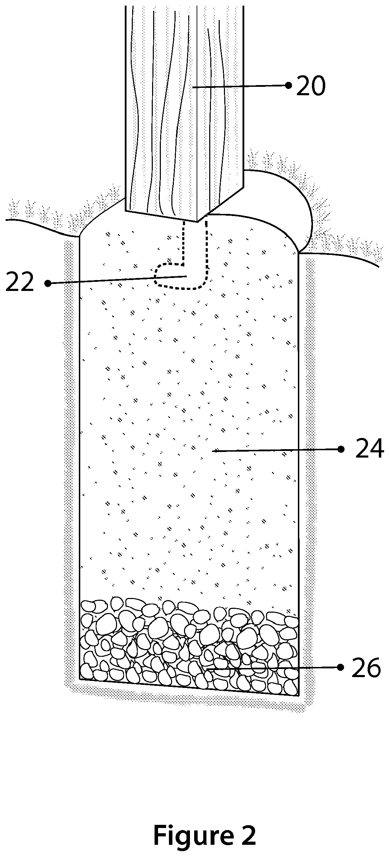

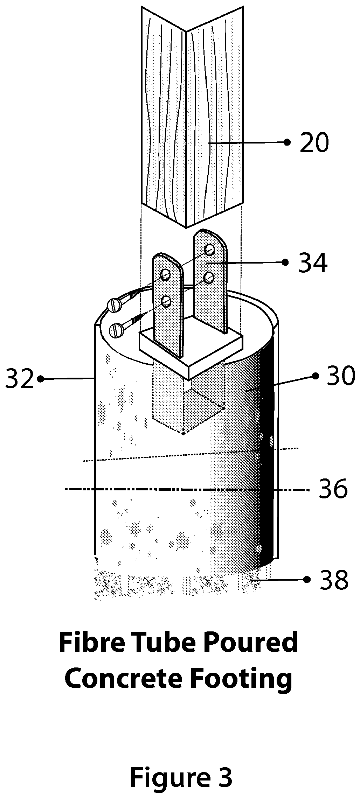

In another example, a concrete pier extends from the footing base to above grade. There are several variations of this footing type. Figure 2 and Figure 3 depict concrete footings that extend below the frost line to above the ground. Both footings have a wood post 20, typically a 15.24 cm × 15.24 cm (6" × 6") post, attached above ground to the concrete pier. For example, in Figure 2, an anchor bolt 22 is used to connect the post to a concrete footing

24. A gravel base 26 may be used at the bottom of the concrete footing to prevent frost heave. In Figure 3, a concrete footing 30 is poured in fiber tube 32, a metal post anchor 34 is placed in the concrete, and then the concrete is allowed to set. The above ground portion of the fiber tube is removed after the concrete is set. The metal post anchor 34 connects the post 20 to the concrete footing 24. Such concrete footings typically extend six inches below the frost line 36 and rest on undisturbed soil 38. The top of the footing is typically at least 15.24 cm (6") above grade.

Wood posts are usually attached to the top of the concrete footing above ground. Untreated wood posts will quickly rot if placed below ground due to the presence of water and oxygen which results in fungal attack, for example. Likewise, untreated metal posts placed below ground will rust. Pressure treated wood is available for use in ground contact applications, some having warranties as long as 75 years, however they are expensive and further may contaminate the ground. Galvanized metals are used for underground applications. Because such foundations rely on anchors, the structure can be compromised if the anchor bolt becomes loose or breaks.

Concrete has many drawbacks. For instance, concrete takes time to cure, is heavy, porous, and brittle, has high labor costs, has a high carbon footprint, needs large quantities of water, and cannot be poured below 5°C. It is desirable to provide an alternative to concrete footing systems.

### BRIEF SUMMARY OF THE INVENTION

The invention is set out in the appended set of claims. The present invention is based on three types of polyurethane footings as herein described. In the first type, as exemplified in Figures 5 and 6, the post is placed at the bottom of the hole. In the second type, as exemplified in Figures 7 and 8, the post is placed on top of the foam, above grade. In the third type of footing, the post is placed inside the foam footing as in Figure 10.

In a first embodiment, foundation footing system for a load-bearing structure comprises a hole in a ground, the hole having a bottom and sides, and a post placed on the bottom of the hole and generally centered within the hole, wherein the post extends above the hole, wherein the width of the hole is wider than a width of the post thus forming a gap between sides of the post and the sides of the hole; the foundation further comprising a cured, closed-cell, polyurethane foam surrounding the post, wherein the polyurethane foam fills the gap between the post and sides of the hole, the polyurethane foam comprising a cured mixture of a polyurethane composition comprising polyisocyanate, a polysiloxane-polyalkylene oxide copolymer surfactant, and at least one active hydrogen containing compound, wherein the cured, closed-cell, polyurethane foam has a compressive strength of greater than 69 kPa (10 psi). The foundation footing system comprises the post and foam.

In another embodiment, method of making a foundation footing system for a load-bearing structure comprises, a) forming a hole in a ground, the hole having a bottom and sides; b) placing a post onto the bottom of the hole such that the post is generally centered within the hole and a gap is formed between sides of the post and the sides of the hole; and c) adding a polyurethane composition into the gap, allowing the polyurethane composition to react and form a foam, thereby filling in the gap, and then to cure to form a cured, closed-cell, polyurethane foam, the polyurethane foam mixture comprising polyisocyanate and at least one active hydrogen containing compound.

In a further embodiment, foundation footing system for a load-bearing structure comprises a hole in a ground, the hole having a top, bottom, and sides; the foundation further comprising cured, polyurethane foam, wherein the foam fills the hole and extends above the top of the hole to form a foundation footing, the polyurethane foam comprising a cured mixture of a polyurethane composition comprising isocyanate, a polysiloxane-polyalkylene oxide copolymer surfactant, and at least one active hydrogen containing compound wherein the cured polyurethane foam has a compressive strength of greater than 207 kPa (30 psi); and further comprising a post placed on and attached to the top of the foam and generally centered on the foam. The foundation footing system comprises the post and foam.

In a further embodiment, method of making a foundation footing system for a load-bearing structure comprises a) forming a hole in a ground, the hole having a top, bottom, and sides; b) placing a polyurethane composition into the hole, allowing the polyurethane composition to react and form a foam, filling in the hole and rising above the hole, and then to cure to form a cured, polyurethane foam footing, the polyurethane foam mixture comprising a polyurethane composition comprising isocyanate, and at least one active hydrogen compound; and further comprising attaching a post to the top of, and generally centered on, the foam.

In preferred embodiments of the above, the foam is a hydrophobic, closed-cell foam that contains at least one water-immiscible component.

These and other aspects of the invention are apparent from the following Detailed Description.

### BRIEF DESCRIPTION OF THE DRAWINGS

Figure 1 illustrates examples of shallow and deep building foundations.
Figure 2 illustrates an example of a prior art concrete footing.
Figure 3 illustrates another example of a prior art concrete footing.

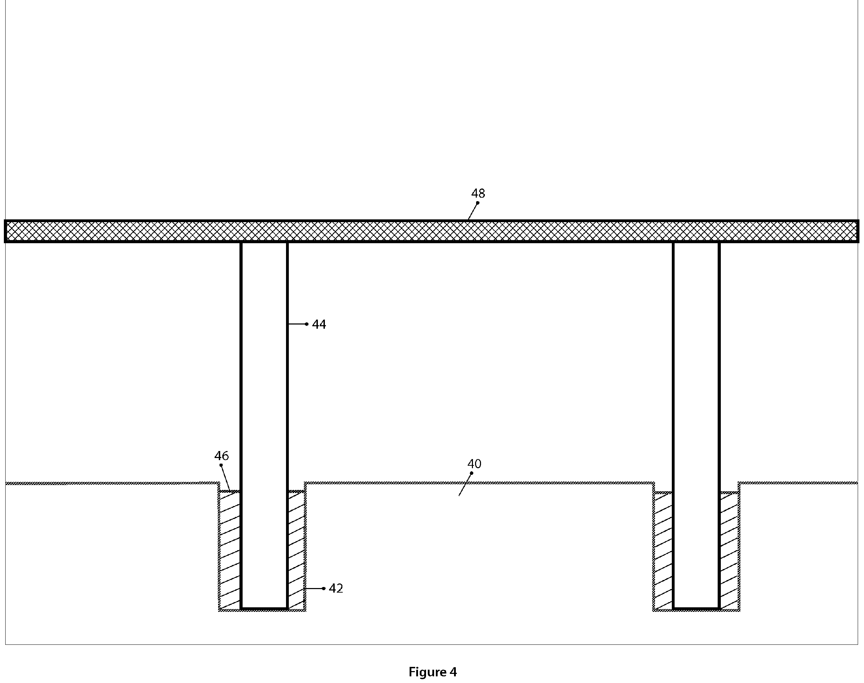

Figure 4 illustrates an example of a foam and post footing in accordance with aspects of the present invention.

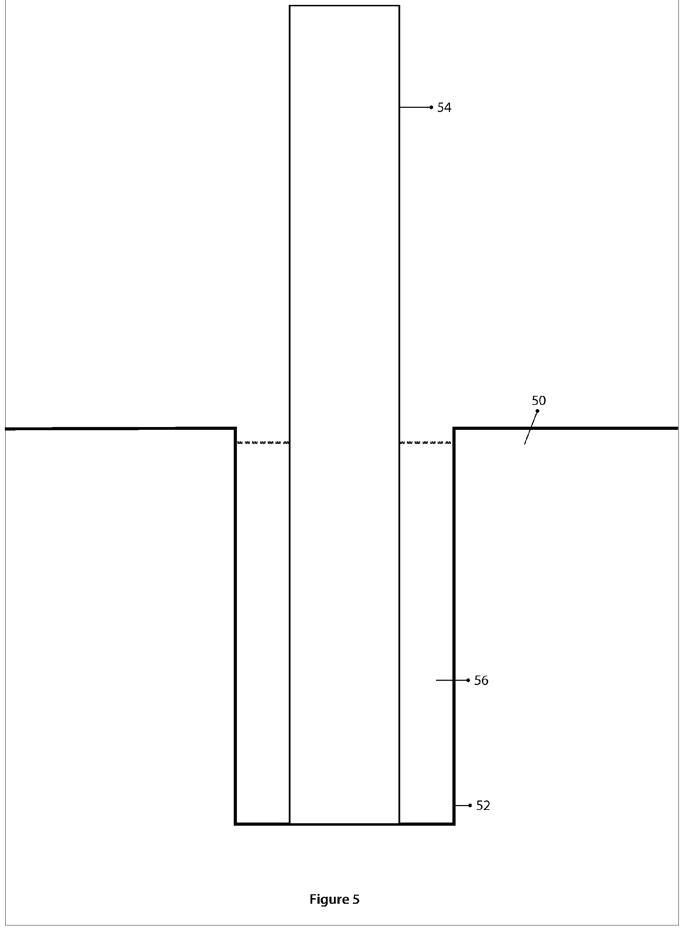

Figure 5 illustrates an example of a foam and post footing in accordance with aspects of the present invention.

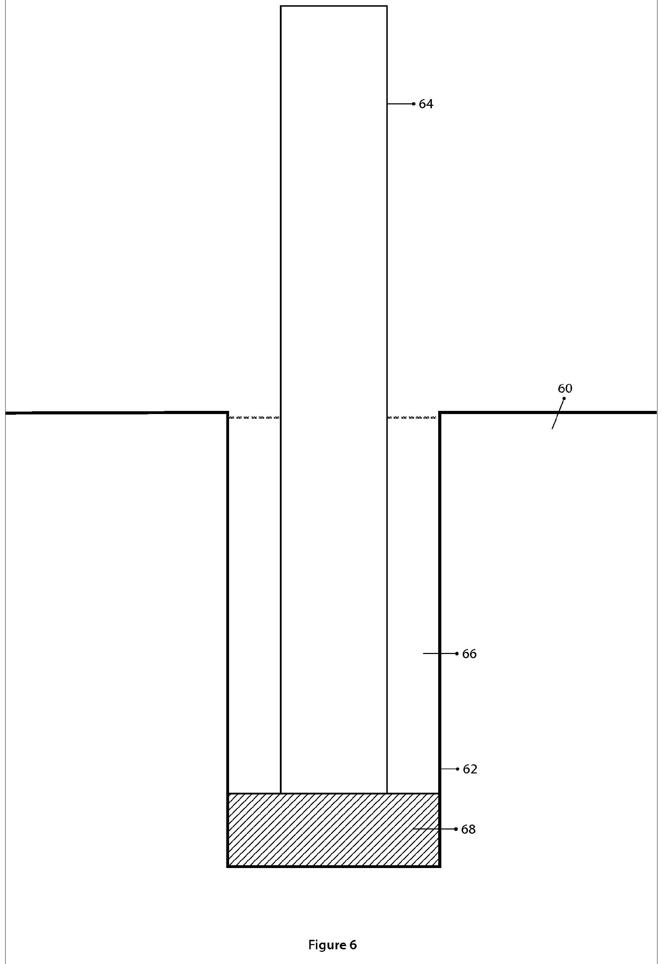

Figure 6 illustrates another example of a foam and post footing in accordance with aspects of the present invention.

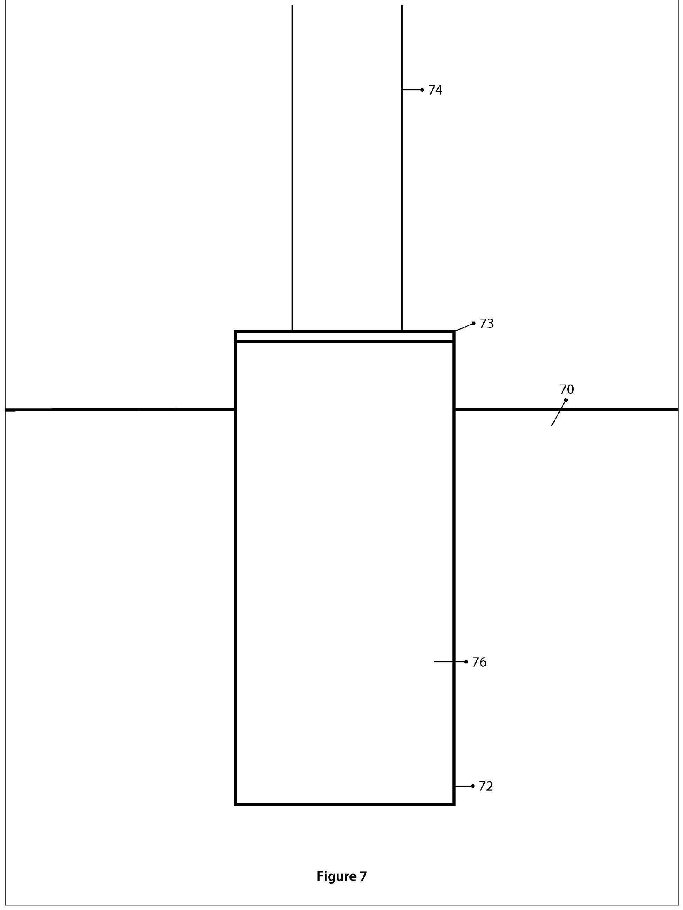

Figure 7 illustrates an example of a foam footing having a post attached to the top of the foam footing in accordance with aspects of the present invention.

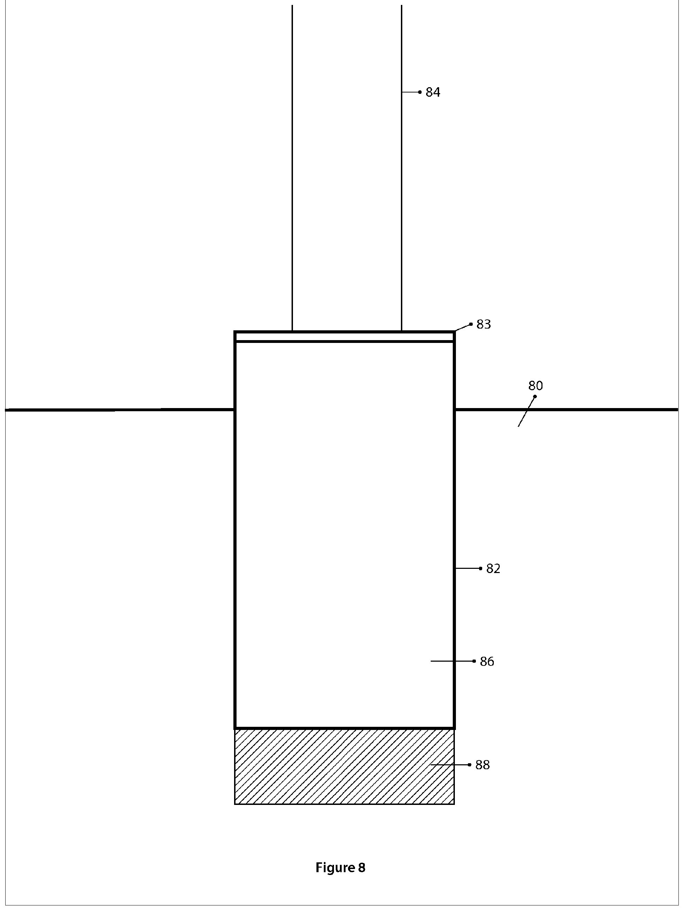

Figure 8 illustrates another example of a foam footing having a post attached to the top of the foam footing in accordance with aspects of the present invention.

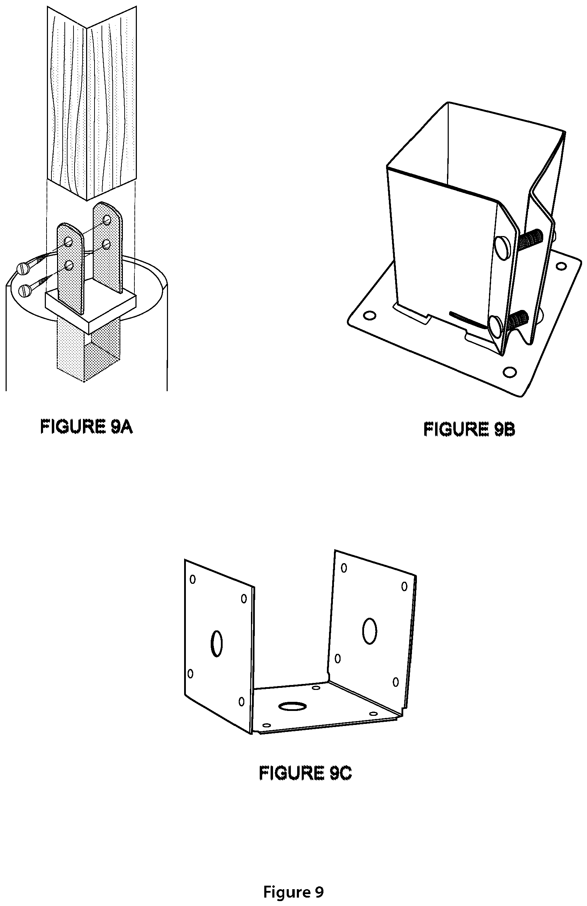

Figures 9a-9c illustrate concrete anchoring systems that can be used with aspects of the present invention.

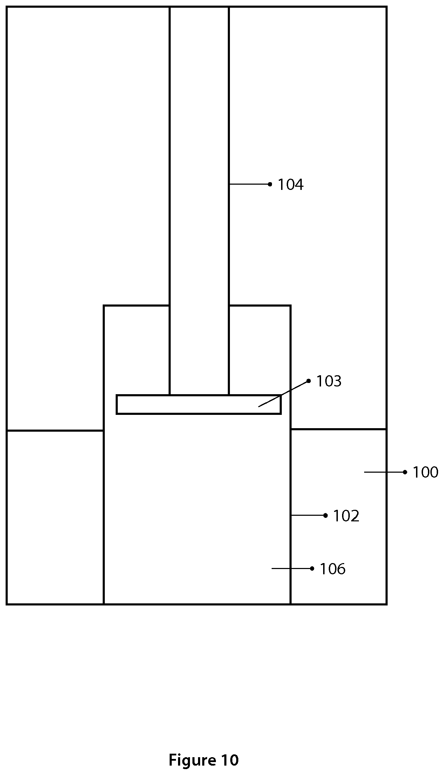

Figure 10 illustrates an anchoring system where the post is imbedded in the foam.

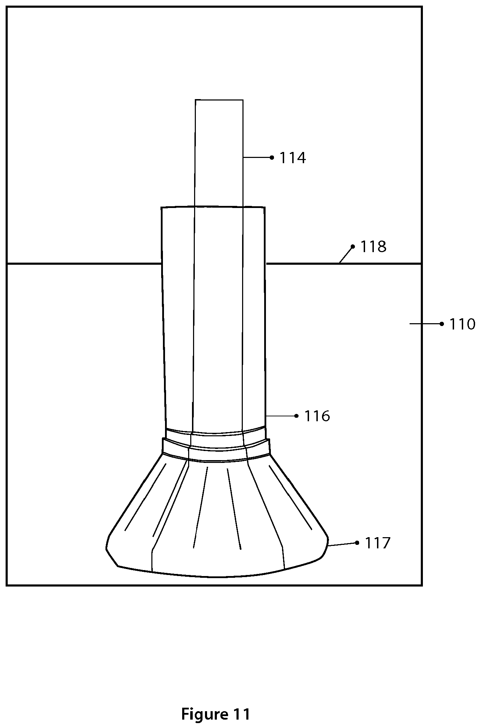

Figure 11 illustrates the use of foam in prefabricated and pre-molded footing forms in accordance with aspects of the invention.

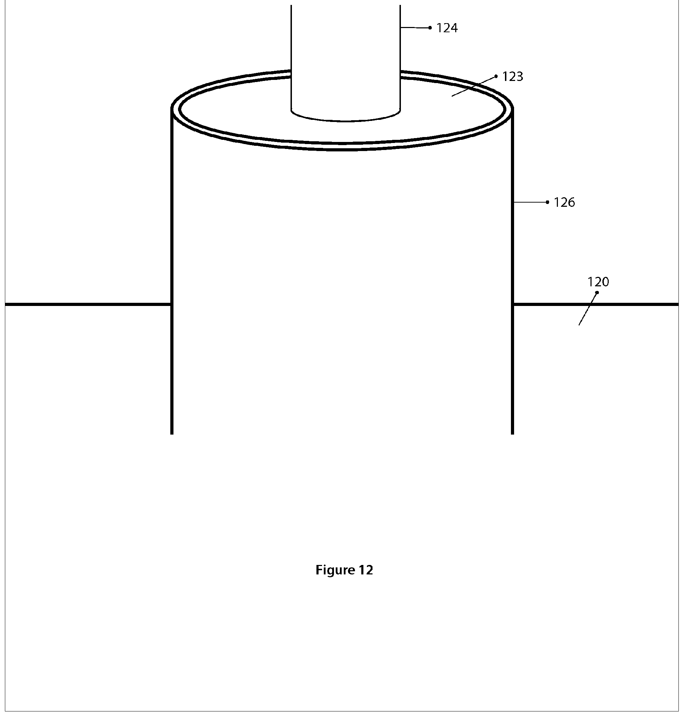

Figure 12 illustrates a space between the footing pad on top of the foam footing and the edge of the foam in accordance with an aspect of the invention.
Figures 4-12 should be understood as illustrative of various aspects of the invention, relating to the compositions, systems, and methods described herein and/or the principles involved. Some features depicted have been enlarged or distorted relative to others, in order to facilitate explanation and understanding. Figures 4-12 do not limit the scope of the invention as set forth in the appended claims.

### DETAILED DESCRIPTION OF THE INVENTION

Type A, unconfined soil, has a compressive strength from about 145 kPa (21 psi) to 572 (83 psi). It can support a load of at least 145 kPa (3000 lb./ft²) and as high as 575 kPa (12,000 lb./ft²). It was discovered that polyurethane foam with similar compressive strength, can have similar load-bearing capacity. This allows for improvements over conventional concrete-based raised foundation systems and footings such as shown in Figures 2 and 3. The present invention is therefore directed to the use of polyurethane as footers in foundation systems.

It was further discovered that polyurethane provides improved results over conventional concrete footings. (a) Concrete takes time to cure, for example, standard concrete takes up to 28 days to cure. Polyurethane foam cures in less than five minutes and reaches full strength in 30 minutes. (b) Labor costs are much higher for constructing foundations with concrete than with polyurethane. (c) Concrete is very heavy; thus transportation and handling costs are very high. In addition, the carbon footprint with concrete is very high. Polyurethane foam is much lighter than concrete and hence cheaper to transport. One pound of polyurethane foam replaces about 45.5 kg (100 pounds) of concrete. (d) Concrete needs large quantities of water. Polyurethane foam does not need water and can be easily used in isolated areas. (e) Concrete is porous and allows water to travel through
it. Polyurethane foam can be made impervious to water and will protect the post from rotting or rusting. It also blocks chemicals used to treat the wood from contaminating the soil. (f) Concrete cannot be poured below 5°C. For every 10°C reduction in concrete temperature, the time of setting of the concrete doubles, thus increasing the amount of time that the concrete is vulnerable to damage due to freezing. Polyurethane foam can be poured below freezing, as long as the foam components are maintained at about 20 to 25°C prior to mixing. (g) Concrete is very brittle and, without reinforcement, breaks easily. The polyurethane foam utilized in the present invention is not brittle, does not stress the post, and will not break easily.

The present invention is directed to post and pier foundation footings that allow for wood, metal, plastic, and composite posts to be used both above ground and below ground for load-bearing structures without a concern of rotting, rusting, or deterioration. In one aspect, the foundation footings utilize posts, such as load-bearing wood and metal posts, as well as water-immiscible and hydrophobic, closed-cell, polyurethane foam surrounding the posts. The closed-cell polyurethane foam bonds to a wood post, preventing moisture from reaching the wood and thus preventing fungal attack. The closed-cell polyurethane foam also bonds to a metal post preventing moisture from reaching the metal and thus preventing rust. The closed-cell polyurethane foam may also be bonded to a plastic post to prevent moisture from reaching the plastic, preventing deterioration or weakening of the plastic.

The present invention further allows for posts to be used both above and below ground for load-bearing structures without a concern of the post moving or shifting. That is, the polyurethane foam of the present invention will provide full support for a post for a load-bearing structure.

A load-bearing foundation is one that supports more than its own weight. It transmits force generally from a higher level to a lower level.

The term post includes any suitable support structure, pole, pier, and the like, to create a proper foundation for a load-bearing structure. The post may be wood, metal, plastic, composite material, or any other material capable of supporting the load. The post may be any suitable geometric shape such as round or square. Typical woods used for support posts are pine and fir. Typical metals used for support posts are aluminum and galvanized steel. Typical plastics used for support posts are PVC and ABS. An example of a composite post is fiberglass or carbon fibers with polyester or epoxy resin as a binder.

One aspect of the invention is shown in Figure 4. A post hole 42 is made in the ground (aka earth) 40 to a suitable depth depending on the required foundation specifications. The hole may be made with any suitable device including, but not limited to, an auger. As shown in Figure 1, the depth will depend on whether a shallow or a deep foundation is required and depends on the weight of the structure and type of ground. Generally holes are round, but other shape holes may be used if desired such as square holes.

The sides of the hole may be scarified to increase the friction between the soil and the footing. As the foam rises it will follow the shape of the scarified walls and go into all the grooves. This will increase the contact area and increase the friction between the soil and the foam. This also pushes the foam against the soil, compacting the soil, and increasing the compressive strength of the soil contacting the foam.

A concrete footing pad can also be placed at the bottom of the hole and below the post. Larger diameter pads are used for weaker soils to increase the load-bearing capacity. This is shown in Table 1.

**Table 1**

| Minimum Width of Concrete or Masonry Footings (inches) | | | | | | |
|---|---|---|---|---|---|---|
| | Load-Bearing Value of Soil (psf) | | | | | |
| | 72 kPa (1,500 psf) | 96 kPa (2,000 psf) | 120 kPa (2,500 psf) | 144 kPa (3,000 psf) | 168 kPa (3,500 psf) | 192 kPa (4,000 psf) |

| Conventional Wood Frame Construction | | | | | | |
|---|---|---|---|---|---|---|
| 1-story | 41 cm (16 inch) | 30 cm (12 inch) | 25 cm (10 inch) | 20 cm (8 inch) | 18 cm (7 inch) | 15 cm (6 inch) |
| 2-story | 48 cm (19 inch) | 38 cm (15 inch) | 30 cm (12 inch) | 25 cm (10 inch) | 20 cm (8 inch) | 18 cm (7 inch) |
| 3 -story | 56 cm (22 inch) | 43 cm (17 inch) | 36 cm (14 inch) | 28 cm (11 inch) | 25 cm (10 inch) | 23 cm (9 inch) |
| 10 cm (4-Inch) Brick Veneer Over Wood Frame or 20 cm (8-Inch) Hollow Concrete Masonry | | | | | | |
| 1-story | 48 cm (19 inch) | 38 cm (15 inch) | 30 cm (12 inch) | 25 cm (10 inch) | 20 cm (8 inch) | 18 cm (7 inch) |
| 2-story | 64 cm (25 inch) | 48 cm (19 inch) | 38 cm (15 inch) | 33 cm (13 inch) | 28 cm (11 inch) | 25 cm (10 inch) |
| 3 -story | 79 cm (31 inch) | 58 cm (23 inch) | 48 cm (19 inch) | 41 cm (16 inch) | 33 cm (13 inch) | 30 cm (12 inch) |
| 20 cm (8-Inch) Solid or Fully Grouted Masonry | | | | | | |
| 1-story | 56 cm (22 inch) | 43 cm (17 inch) | 33 cm (13 inch) | 28 cm (11 inch) | 25 cm (10 inch) | 23 cm (9 inch) |
| 2-story | 79 cm (31 inch) | 58 cm (23 inch) | 48 cm (19 inch) | 41 cm (16 inch) | 33 cm (13 inch) | 30 cm (12 inch) |
| 3 -story | 102 cm (40 inch) | 76 cm (30 inch) | 61 cm (24 inch) | 51 cm (20 inch) | 43 cm (17 inch) | 38 cm (15 inch) |

Usually precast concrete, at least 10 cm (four inches) thick with a 28 day compressive strength greater than 8274 kPa (1200 psi), or poured-in-place concrete at least 15 cm (six inches) thick with a compressive strength of at least 20684 kpa (3000 psi) after 28 days, is used. For heavy loads, pads over 30 cm (twelve inches) thick may be required. ABS footing pads and other pads that are listed for the required load capacity can also be used.

A post 44 is placed onto the bottom of the hole, either directly, or on a footing pad placed on the bottom of the hole, and generally centered within the hole 42. The post being generally centered means that the post is placed roughly in the middle of the hole; but the post may be slightly off center with the hole so long as the foundation structure is not compromised. Moreover, the shape of the hole and the shape of the post may not correspond to provide the same distance between all sides of the post and all sides of the hole. For instance, a square post may be used in a round hole.

A footing pad has a very high compressive strength (greater than 6895 kPa (1000 psi)). It will not distort when there are high loads on the post. This ensures that the load is evenly distributed over the entire surface of the footing pad and the soil.

A polyurethane composition is mixed, and immediately poured into the hole around the post. The foam will rise and generally will be tack-free in 1 to 20 minutes, more typically 2 to 10 minutes, or 4 to 6 minutes at 25°C. It will be fully cured in 25 to 180 minutes, generally approximately 60 minutes. At this point a load can be placed on the post. The foam components can be mixed in environments from about 30°C to temperatures well below freezing. The components of the foam just prior to mixing can be at any suitable temperature, but preferably between 20 and 25°C. Typically component temperatures should be at least 15°C prior to mixing. At lower temperatures, the foam will cure slower and will have a higher foam density then when cured at higher temperatures. At higher temperatures the foam will cure faster and will be tack-free in a shorter time but the cured density of the foam may be much lower than required for the application. A lower foam density will make the foam weaker. The air temperature can be hot or cold, but soil temperature in the hole typically should not be above 30°C. The foam generates a considerable amount of heat as it cures. This exotherm allows it to cure quickly at low temperatures. For example, the foam when cured at 25°C may have a foam density of 80 kg/m³ (0.080 gm/cc) and a compressive strength of 690 kPa (100 psi). When cured at 15°C, the foam density will be 100 kg/m³ (0.100 gm/cc) with a compressive strength of 1034 kPa (150 psi). When cured at higher temperatures, such as 35°C, the foam density will be around 50 kg/m³ (0.050 gm/cc), with a compressive strength around 482 kPa (70 psi).

Any premeasured portable mixing/dispensing system can be used to mix and dispense small quantities of the foam. For large holes or for filling many holes, a meter/mix dispenser can be used. In this equipment, the two components can be dispensed and mixed from 19 L (5 gallon) pails, 208 L (55 gallon) drums, or bulk dispensers. The two components can be mixed with a dynamic or static mixer. This equipment is well known by those familiar with the art.

Turning again to Figure 4, the polyurethane components react and foam 46 rises up, typically to above the ground surface, and completely surrounds the post 44. After curing, the foam firmly anchors the post in the ground. Any excess foam that rises above ground level may be cut off, if desired. The polyurethane foam allows the post to be placed directly in the hole, below the frost line. The foam holds the post firmly in an upright position and prevents moisture from contacting the post. Unlike concrete, the foam does not stress the post. The foam bonds to the post. The foam adapts to the changing climatic conditions and efficiently transfers the load from the foundation to the soil. A building floor 48 may be built on the post 44.

Figures 5 and 6 show two aspects of using a post below ground. In Figure 5, post hole 52 is made in the ground 50. A post 54 is placed onto the bottom of the hole and generally centered within the hole 52. Polyurethane components are combined and poured into the hole. The polyurethane components react and foam 56 rises up. In Figure 6, post hole 62 is made in the ground 60. A footing pad 68 is placed at the bottom of the hole. A post 64 is placed onto pad 68 at the bottom of the hole and generally centered within the hole 62. Polyurethane components are combined and poured into the hole. The polyurethane components react and foam 66 rises up. As discussed above, pads may be made of any suitable material and would typically be concrete or a polymer, such as ABS.

As shown in Figure 7 and Figure 8, the polyurethane foam can also be used to completely fill the hole and rise above the hole. The post can then be placed on top of the foam and anchored to it. The foam is the foundation footing.

In Figure 7, a post hole 72 is made in the ground 70 to a suitable depth depending on the required foundation specifications. Polyurethane components are combined and poured into the hole. The polyurethane components react and foam 76 rises up, typically from one to three feet above ground. A round cardboard forming tube, the same diameter as the hole, such as a Sonotube, can be used to shape the foam when it rises above ground. When the foam has cured, it can be cut level to the ground or up to three feet above the ground. It is usually cut above the ground to prevent the post from degrading by contacting the wet soil.

A footing pad 73 can be placed on top of the tube so that the foam presses up against the pad as it rises. The foam must bond to the pad as it cures. The pad helps to distribute the load on the post over the surface of the foam that is under the pad. The floor of a structure can be built on top of the post 74. When the post is on top of the footing pad, the compressive strength of the foam and the adhesions of the foam to the soil are important factors in the load-bearing capacity of the footing.

Post 74 may be attached to the foam footing or the plate on top of the foam footing in any suitable manner. For example, brackets or adhesives may be used to attach the post.

Similarly in Figure 8, a post hole 82 is made in the ground 80 to a suitable depth. A footing pad 88 is placed at the bottom of the hole. Polyurethane components are combined and poured into the hole. The polyurethane components react and foam 86 rises up as discussed above. A flat footing pad 83, as discussed above may be used so that the foam cures flat and the pad is bonded to it. Post 84 is then attached to the pad as discussed above.

Many of the anchoring systems used with concrete footings also can be used with foam footings. Figures 9a - 9c illustrate examples of concrete anchoring systems that can be used with foam footings. The bottom of such systems may either be embedded into the foam (Figure 9a) and/or attached to the foam or a footing pad via fasteners such as screws or bolts (Figures 9b and 9c.). Adhesives can also be used.

Figure 10 shows an anchoring system where the post 104 is imbedded in the foam 106. A hole 102 is dug in soil 100. A footing pad 103 is attached to the bottom of the post 104. Foam 104 fills the hole 102 to the desired level. The footing pad 103 and post 104 are placed on top of the foam and leveled. Additional foam is poured on top of the footing pad and surrounding the post and then the foam is allowed to cure.

Figure 11 depicts the use of a prefabricated footing form. A hole is dug in soil 110. A prefabricated footing form 117, for example, a prefabricated box, such as a wood box attached to a cardboard construction tube or a pre-molded footing form, is placed in the hole and soil is back filled outside the footing form. The footing form 117 extends above the ground level 118. The post 114 is placed within the footing form 117. Foam 116 fills the interior of the footing form and surrounds the pole.

Figure 12 depicts a post 124 placed in soil 120 utilizing a foam footing 126 and a footing pad 123. The space between the footing pad 123 on top of the foam footing 126 and the edge of the foam footing should be small so the load on the post will be distributed over the largest area possible. That is, in Figure 12, the radius of footing pad 123 is only slightly smaller than the radius of the foam footing 126.

The post with the footing pad attached to its bottom can be placed at the bottom of the hole or at the top or it can be placed anywhere in between. It is preferable to place it closer to the top of the hole to make leveling of the foam easier.

When prefabricated footing forms are used, the post can be placed above ground or below ground as described above. The foam footings can also be cured inside of the prefabricated footing form during the manufacture of the footing form or at the construction site.

Deep foundations are greater than 3 meters below ground level. In deep foundations driving piles have a higher load-bearing capacity than drilling shafts. Driving the piles compress the surrounding soil, causing greater friction against the soil next to the pile. Injecting the polyurethane composition between the drilling shaft and the soil will increase the friction and the load-bearing capacity of the pile.

Depending on the load, the soil and the compressive strength of the foam, a footing pad may need to be placed under the foam footing. When the post is at the bottom of the hole, a concrete footing pad can be used. When the post is not touching the soil at the bottom of the hole, the post should be attached to a treated wood, ABS, or any other type of footing pad that will not substantially increase the load on the foam.

The method to determine the proper size and load-bearing capacity required for footings is the same for foam, concrete, or any other load-bearing footing material. First it must be established how much total weight each footing will support. The type of soil that will be under the footing and the load-bearing capacity of this soil must be determined. As discussed above, the compressive strength of the foam must also be considered. For higher loads or weaker soils, larger footings are required. There are standard tables available to help determine the size and design of footing (see Table 1 above). An engineer may be required to calculate the footing requirements for higher loads or in areas where the load-bearing capacity of the soil is less than 72 kPa (1500 lb/ft²). Determining the requirements of the footing can easily be obtained by those skilled in the art. The footing transmits the load into the soil. The lower the bearing capacity of the soil, the wider the footing needs to be.

Table 2 illustrates a sample load footing size chart utilizing polyurethane foam.

**Table 2**

| SOIL TYPE | Gravel | Sand | Clay |
|---|---|---|---|
| Compressive Strength of Soil | 144 kPa (3000 lb/ft²) | 96 kPa (2000 lb/ft²) | 72 kPa (1500 lb/ft²) |

| Circular Footing Size (inches) | Maximum Allowable Load/Footing | | |
|---|---|---|---|
| (Nominal 10 cm x 10 cm (4"x4") Post in | | | |
| 15 cm (6") | 272 kg (600 lbs.) | 181 kg (400 lbs.) | 136 kg (300 lbs.) |
| 20 cm (8") | 454 kg (1000 lbs.) | 318 kg (700 lbs.) | 227 kg (500 lbs.) |
| 25 cm (10") | 726 kg (1600 lbs.) | 499 kg (1100 lbs.) | 363 kg (800 lbs.) |
| 30 cm (12") | 1043 kg (2300 lbs.) | 680 kg (1500 lbs.) | 499 kg (1100 lbs.) |
| 33 cm (13") | 1225 kg (2700 lbs.) | 816 kg (1800 lbs.) | 590 kg (1300 lbs.) |
| 36 cm (14") | 1451 kg (3200 lbs.) | 953 kg (2100 lbs.) | 726 kg (1600 lbs.) |
| 38 cm (15") | 1633 kg (3600 lbs.) | 1089 kg (2400 lbs.) | 816 kg (1800 lbs.) |
| 41 cm (16") | 1860 kg (4100 lbs.) | 1225 kg (2700 lbs.) | 907 kg (2000 lbs.) |
| 43 cm (17") | 2132 kg (4700 lbs.) | 1406 kg (3100 lbs.) | 1043 kg (2300 lbs.) |
| 46 cm (18") | 2404 kg (5300 lbs.) | 1588 kg (3500 lbs.) | 1179 kg (2600 lbs.) |
| 48 cm (19") | 2676 kg (5900 lbs.) | 1769 kg (3900 lbs.) | 1315 kg (2900 lbs.) |
| 51 cm (20") | 2948 kg (6500 lbs.) | 1950 kg (4300 lbs.) | 1451 kg (3200 lbs.) |
| 53 cm (21") | 3266 kg (7200 lbs.) | 2177 kg (4800 lbs.) | 1633 kg (3600 lbs.) |
| 56 cm (22") | 3583 kg (7900 lbs.) | 2358 kg (5200 lbs.) | 1769 kg (3900 lbs.) |
| 58 cm (23") | 3901 kg (8600 lbs.) | 2585 kg (5700 lbs.) | 1950 kg (4300 lbs.) |
| 61 cm (24") | 4264 kg (9400 lbs.) | 2812 kg (6200 lbs.) | 2132 kg (4700 lbs.) |

| | | | |
|---|---|---|---|
| (A nominal 10 cm × 10 cm (4" × 4") post is actually a 9 cm × 9 cm (3 ½ "x 3 ½") post) | | | |

Structures that weigh little and only put a light load on the soil only require small footings. For example, a small pergolas or arbor that weights 181 kg (400 lbs) will have a 45 kg (100 lb) load per footing. A 15 cm (6") footing on the weakest soil can hold up to 136 kg (300 lbs) and would be adequate for this type of project.

One can look up the recommended footing size, based on the size and type of house and the bearing capacity of the soil. As can be seen, heavy houses on weak soil may need footings 61 cm (2 feet) wide or more. But the lightest buildings on the strongest soil may only require footings as narrow as 18 or 20 cm (7 or 8 inches).

It is very important that the foam used for this application, in wet or damp soil is water-repellant and hydrophobic. "Water-repellant" refers to the mixed isocyanate and polyols composition in the liquid state and while it is curing. "Hydrophobic" refers to the polyurethane foam when it is cured.

The hole to be filled with the polyurethane foam may contain ground water or runoff water. Standard polyurethane foam will absorb and react with this soil water. This will produce a footing having low density and low strength. The foam density and strength must be closely controlled. The present invention utilizes special polyurethane foam forming compositions which are resistant to the undesired side reaction with ground water. Foams that are not water-repellant can be used when the soil is not wet and the hole to be filled does not contain ground water or runoff water. They can also be used to make prefabricated footings.

U.S. 3,564,859 first introduced the concept of adding a non-volatile water-immiscible material to polyurethane components so that the properties of the resultant product are not affected excessively in the presence of groundwater. U.S. 4,966,497 improved on the above by removing halogenated hydrocarbon blowing agents from the formulation. It was discovered for the present application that adding a hydrophobic surfactant to the formulation provides the desired properties for the polyurethane foam used for footers.

### WATER-REPELLENCY

The composition of the present invention utilizes conventional materials such as polyisocyanate and active hydrogen containing compounds, but for wet or damp conditions, also includes water-immiscible components. The water-immiscible components provide the water-repellency of the polyurethane foam composition in the liquid state, while it is curing. The water-immiscible components can be any of a large number of materials or mixtures of materials. Preferably the water-immiscible component is a liquid having a low vapor pressure which is substantially non-reactive under the usual conditions of foam formation with either the active hydrogen or the isocyanate components used to form the polyurethane compositions. Materials which react with either or both of the polyurethane components may comprise part or most of the water-immiscible component.

"Water-immiscible" means that the solubility in water at about 21°C (70°F) is less than about 5 grams per 100 grams and preferably less than about 1 gram per 100 grams of water. In a preferred embodiment, the water-immiscible component has no measurable solubility in water. Among the water-immiscible components are those described in U.S. 3,968,657. Among the water- immiscible components having a low vapor pressure are the higher alkanes (C₈ and above), crude oil, petroleum oils and higher petroleum fractions of all kinds (both pure and crude), asphalts, tars, petroleum refining bottom or residues. Components that are comprised primarily of aromatic or aliphatic hydrocarbons are water-immiscible. Also included are materials such as coal tar pitch, wood tar pitch, tall oil, tall oil derivatives, vegetable oil, vegetable oil derivatives, and waxes. Solid materials that are water- insoluble and that can be dissolved in a water-immiscible liquid. Halogenated hydrocarbons and halogen derivatives can also be used. Said US 3,968,657 discloses a method of setting or resetting poles in the ground with foamed polyurethane resins formed in-situ from polyisocyanate and resin which comprises extending polyurethane components with a nonvolatile water-immiscible material (e.g. hydrocarbon oil) which inhibits the undesired reaction of water and polyisocyanate. The water-immiscible component is a liquid having a low vapor pressure which is substantially non-reactive with either the resin or the polyisocyanate components used to form the polyurethane composition. Exemplary compositions disclosed in US 3,968,657 contain, in part by weight, 20 to 25 % PAPI 135 ((polymeric diphenylmethyl diisocyanate), 5 to 10% Quadral (N,N,N',N'-tetrakis(2-hydroxypropyl)-ethylene-diamine, 50 to 60% curde oil (or Exxon S-2 tar), 6 to 2% Freon 11, 8 to 12% Dow Polyol RN 490, 0.1% tertiary amine catalyst, 0.3% Surfactant, and 0 to 0.2% Water.

Water-immiscible solvents can also be used. Suitable water-immiscible solvents include blowing agents such as HCFC's, pentane, and hexane as well as high boiling solvents such as high flash aromatic naptha in amounts up to about 15% by weight of the total composition.

Sufficient compatible water-immiscible components should be present to inhibit the reaction with water. Excessive water-immiscible components or incompatible water-immiscible components may result in unacceptable deterioration of the physical characteristics of the final foam and should be avoided. The desired polyurethane foam can be obtained from compositions containing 10% - 80% by weight of the water-immiscible components. Preferably, the amount of water-immiscible components is in the range of 30% to 60% by weight of the polyurethane foam forming compositions.

### HYDROPHOBICITY

It is preferred that the cured foam is closed-cell. Water should not be able to pass through the foam. This is particularly important when the post is in-ground and surrounded by the foam.

Surfactants help to control the precise timing and the size of the foam cells. Within each foam formulation, a minimum level of surfactant is needed to produce commercially acceptable foam. In the absence of a surfactant, a foaming system will normally experience catastrophic coalescence and exhibit an event known as boiling. With the addition of a small amount of surfactant, stable yet imperfect foams can be produced; and, with increasing surfactant concentration, a foam system will show improved stability and cell-size control.

Most cured, rigid polyurethane foams contain closed cells. Higher density rigid foams have thicker cell walls and thus have a higher percentage of closed cells than lower density rigid foams. The inclusion of a hydrophobic surfactant improves the uniformity and size of the cell structure. It also increases the closed cell content; thus, increasing the hydrophobicity of the foam. It is important that lower density foams that require hydrophobicity have a sufficient concentration of closed cells to make them hydrophobic. Foams suitable for use in some footing applications have foam densities as low as 35 kg/m³ (0.035gm/cc) and a compressive strength as low as 69 kPa (10 psi) although generally at least 207 kPa (30 psi). Foams with densities higher than 100 kg/m³ (0.10 gm/cc) and compressive strengths higher than 689 kPa (100 psi) can be used, but may be cost prohibitive in many applications. Preferred foam densities are higher than about 64 kg/m³ (4 lb/ft³). Preferred compressive strengths are higher than about 345 kPa (50 psi), 552 kPa (80 psi), and in some instances are preferably 6 8 9 kPa (100 psi). There is no preferred upper limit for both the foam density and the compressive strength. However, the cost will increase as the foam density increases. Foams can be formulated with specific properties, such as compressive strength and foam density for specific applications.

### SURFACTANTS

The foams of the invention are prepared using a surfactant, particularly a hydrophobicity inducing surfactant. As set out in the appended set of claims, surfactants are polysiloxane-polyalkylene oxide copolymers, usually the non-hydrolyzable polysiloxane-polyalkylene oxide copolymer type. The polyoxyalkylene (or polyol) end of the surfactant is responsible for the emulsification effect. The silicone end of the molecule lowers the bulk surface tension. When a hydrolyzable surfactant, which contains Si-O linkages between the silicon and polyether groups, is contacted with water, the molecule breaks apart to form siloxane and glycol molecules. When this occurs, the individual molecules no longer exhibit the proper surfactant effects. Non-hydrolyzable type surfactants, which contain a water stable Si-C bond between the silicon and polyether chain, are thus preferred.

Hydrophobicity inducing surfactants include: Goldschmidt Chemical Corp. of Hopewell, Va. products sold as B8110, B8229, B8232, B8240, B8870, B8418, B8462; Organo Silicons of Greenwich, Conn. products sold as L6164, L600 and L626; and Air Products and Chemicals, Inc. products sold as DC5604 and DC5598. Preferred surfactants are B8870, B8110, B8240, B8418, B8462, L626, L6164, DC5604 and DC5598. B8870 and B8418 from Goldschmidt Chemical Corp. are more preferred; B8418 is most preferred.

Non-hydrophobic inducing surfactants, such as Dow Corning DC190 and DC 193 can be used in dry, above ground and prefabricated applications.

The surfactant is used in the range of 0.1-5% of the total formulation. Generally, lower density foams require more surfactant than higher density foams

### ISOCYANATES

In principle, a wide range of isocyanates may be used to prepare polyurethane foams of the invention such as, for example, toluene diisocyanate (TDI), diphenylmethane diisicyanate, polymethylenepolyphenylene polyisocyanate, hexamethylene diisocyanate (HMDI), 1, 5-naphthylene diisocyanate, xylylene diisocyanate, hydrogenated polymethylenepolyphenylene polyisocyanate, and mixtures thereof. Isocyanate prepolymers can also be used. Polymeric MDI is the preferred isocyanate used in this invention.

### POLYOLS

Polyols useful in the preparation of the polyurethane foams used in this invention can be either one or a combination of polyether, polyester polyols, or polyalkyldiene polyols, or derived from reaction of excess of such polyols, alone or in combination with isocyanate function compounds. The polyols can be diols, triols, tetrols or polyols with higher functionality. They can be used alone or in combination. Representative examples of useful polyols include polyoxypropylene polyol, polyalkylene polyol, and polypropylene glycols. They can be amine polyols, sucrose polyols, glycerol polyols, sorbitol polyols, or combinations. The polyols used can be aliphatic or aromatic.

Most commercially available polyols have a polyether or polyester backbone. They are usually hydrophilic and soluble in water. Water-immiscible and hydrophobic polyols available include those with hydrocarbon and polybutadiene backbones. Bio based, water-immiscible, polyols are also available.

### CATALYSTS

Tertiary amines and organo-tin compounds are preferably used as catalysts. The particular tertiary amine and organo-tin catalyst used in obtaining the hydrophobic polyurethane foams of the present invention is not critical, and any combination of components readily known to those skilled in the art may be used. Examples of suitable tertiary amines include triethylenediamine, triethylamine, N-methylmorpholine, N-ethylmorpholine and N,N,N'N'-tetramethylbutanediamine. Suitable organo-tin catalysts include stannous octoate and dibutyltin dilaurate.

Up to about 5% by weight of a catalyst can be used bases on the total reaction material weight. Preferably the catalyst should range from 0.01 to about 1.0% by weight. Tertiary amine and organo-tin compounds are preferred.

### BLOWING AGENTS

Examples of blowing agents that can be used in the present invention include water, low boiling alkanes such as butane and pentane, acetone and liquid carbon dioxide. Halogenated blowing agents (HCFC's) can also be used, even though they are not preferred. Water is the preferred blowing agent in this invention. Blowing agents are used between 1 and 20% by weight and more preferably between 1 and 15% based on the total weight of the formulation.

### ADDITIONAL COMPONENTS

Additional components that may be used in the present polyurethane foams include, for example, crosslinking agents; fillers, such as carbon black and calcium carbonate; coloring dyes, antioxidants, fungicides, pesticides and anti-bacterial additives, flow agents, viscosity modifiers, foam control agents, plasticizing agents, moisture scavengers, adhesion promoters, temperature stabilizers, and ultraviolet radiation stabilizers.

Flame retardants may also be added to render the foamed product flame retardant. Suitable flame retardants include tris(chloroethyl) phosphate, tris(2-chloroethyl) phosphate, tris(dichloropropyl) phosphate, chlorinated paraffins, tris(chloropropyl) phosphate, phosphorus-containing polyols, and brominated aromatic compounds such as pentabromodiphenyl oxide and other brominated polyols.

The polyurethane composition has a low viscosity, typically 500 to 5000 mPas (500 to 5000 cps) when measured with a Brookfield Viscometer at 25°C temperature. The low viscosity, in part, allows the composition to be easily poured into the hole. The composition can be made water-repellant and hydrophobic to prevent external moisture from becoming part of the foam structure and reducing the compressive strength. The polyurethane will start to foam as soon as the two components are mixed together.

The polyurethane composition is added to the hole, reacts, and foams up. It is noted that some of the reaction may begin prior to adding to the hole. For in-ground applications, it is preferred that the resulting polyurethane foam is water-repellant hydrophobic and closed-cell, to prevent water or other liquids from passing through the foam to rot wood or corrode metal. The resulting polyurethane foam then preferably cures to touch in about 3 to 4 minutes after mixing and is fully cured in less than 2 hours after mixing. By changing the catalyst concentration, the gel time and tack-free time of the foam can be made faster or slower, depending on the working time required for a particular application. The gel time can be as long as 20 minutes and as fast as 30 seconds.

The polyurethane foam has good adhesion to wood, metal, plastics and composite materials, soil, clay, gravel and rocks. This is evident from the results listed in Table 2 below.

The polyurethane foam also provides an abrasive surface to increase friction against soil. This helps prevents movement of the footing through the soil.

The compressive strength is also important to prevent damage to the foam as a greater load is placed on the footing and it moves through the soil. The compressive strength of the foam is usually between 207 kPa (30 psi) and 2068 kPa (300 psi) for most applications. However, it may be higher, depending on the footing requirements. A particular aspect utilizes foam that provides a compressive strength of 689 kPa (100 psi).

The foamable compositions utilized in the present invention can vary with the requirements mentioned above. The following are representative of water-repellant, hydrophobic closed cell foams. All parts are by weight.

### Example 1

### Component 1

| | |
|---|---|
| 4,4' diphenylmethane diisocyanate | 100% |

### Component 2

| | |
|---|---|
| Sucrose Based Polyether Polyol | 60.8% |
| Petroleum Hydrocarbon | 30% |
| High Flash Naptha Solvent | 5% |
| Hydrophobic Silicone Surfactant | 2% |
| Catalyst | 0.2% |
| Water | 2% |

The mixed viscosity is 1100 mPas (1100 cps). This composition has a cured foam density of 100 kg/m³ (0.10 gm/cc) and a compressive strength of 689 kPa (100 psi).

### Example 2

### Component 1

| | |
|---|---|
| 4,4' diphenylmethane diisocyanate | 100% |

### Component 2

| | |
|---|---|
| Sorbitol Polyol | 47.9% |
| Amine Polyol | 20% |
| Vegetable Oil | 20% |
| Hydrophobic Surfactant | 5% |
| Catalyst | 0.1% |
| Water-Repellant Blowing Agent, e.g. Pentane | 7% |

The mixed viscosity is 4200 mPas (4200 cps). The foam density is 60 kg/m³ (0.06 gm/cc). The compressive strength is 414 kPa (60 psi).

Below are formulations for non-water-repellant rigid, polyurethane foams. They can be used above grade, in dry soils and to make prefabricated footings.

### Example 3

### Component 1

| | |
|---|---|
| 4,4'diphenylmethane diisocyanate | 100% |

### Component 2

| | |
|---|---|
| Sorbitol Polyol | 60% |
| Polyether Polyol | 32% |
| Non-Hydrophobic Surfactant | 3% |
| Catalyst | 1% |
| Water | 4% |

The mixed viscosity is 1800 mPas 1800 cps. The foam density is 50 kg/m³ (0.05 gm/cc). The compressive strength is 379 kPa (55 psi).

### Example 4

### Component 1

| | |
|---|---|
| 4,4'diphenylmethane diisocyanate | 100% |

### Component 2

| | |
|---|---|
| Glycerol Polyol | 73.8% |
| Polypropylene Glycol | 20% |
| Non-Hydrophobic Surfactant | 3% |
| Catalyst | 0.2% |
| Water | 3% |

The mixed viscosity is 3000 mPa (3000 cps). Foam density is 85 kg/m³ (0.085 gm/cc). The compressive strength is 552 kPa (80 psi).

By adjusting the concentration of the various raw materials, the physical and chemical properties of the foam can be changed. For example, decreasing the catalyst concentration will slow down the gel time. Increasing the water concentration will decrease the foam density and decrease the compressive strength. Changing the properties of the foam is easily done by those familiar with the art.

In the Tables below, the compressive and tensile strength of wood post/foam footings are compared to wood post/concrete footings. Tables 2 and 3 give the compressive and tensile strength of the footing system shown in Figure 5 consisting of wood post 54 in hole 52 held in place by foam 56. The soil 50 was compressed. The 689 kPa (100 psi) foam gave values similar to concrete.

**TABLE 2**

| **COMPRESSIVE STRENGTH** | | | |
|---|---|---|---|
| **FOOTING** | **PEAK LOAD ON FOOTING** | **COMPRESSIVE STRENGTH OF FOOTING** | **SOIL COMPRESSIVE STRENGTH** |
| SOIL | 33 kg (73 lb.) | 6619 kPa (960 PSI) | 193 kPa (28 PSI) |
| CONCRETE | 66 kg (145 lb.) | 1420 kPa (206 PSI) | 165 kPa (24 PSI) |
| 276 kPa (40 PSI) FOAM | 45 kg (99 lb.) | 972 kPa (141 PSI) | 145 kPa (21 PSI) |
| 689 kPa (100 PSI) FOAM | 66 kg (146 lb.) | 1434 kPa (208 PSI) | 193 kPa (28 PSI) |

**TABLE 3**

| **TENSILE STRENGTH** | | | |
|---|---|---|---|
| **FOOTING** | **PEAK LOAD ON FOOTING** | **TENSILE STRENGTH OF FOOTING** | **SOIL COMPRESSIVE STRENGTH** |
| CONCRETE | 18 kg (40 lb.) | 393 kPa (57 PSI) | 193 kPa (28 PSI) |
| 276 kPa (40 PSI) FOAM | 19 kg (41 lb.) | 407 kPa (59 PSI) | 145 kPa (21 PSI) |
| 689 kPa (100 PSI) FOAM | 22 kg (49 lb.) | 483 kPa (70 PSI) | 193 kPa (28 PSI) |

Tables 4 and 5 give the compressive and tensile strength for the footing shown in Figure 6. Post 64 and foam 66 were placed over rigid pad 68 in hole 62. The soil 60 was compressed. In a similar manner, a post and concrete was placed over a rigid pad. The pad was 2000 psi concrete or a 2000 psi polymer. Loose gravel was also used. In this system, the 689 kPa (100 psi) foam performed best. The concrete performed similarly to the 276 kPa (40 psi) foam.

**TABLE 4**

| **COMPRESSIVE STRENGTH** | | | | |
|---|---|---|---|---|
| **FOOTING** | **BOTTOM PAD** | **PEAK LOAD ON FOOTING** | **COMPRESSIVE STRENGTH OF FOOTING** | **SOIL COMPRESSIVE STRENGTH** |
| SOIL | Prefab Concrete | 38 kg (83 lb.) | 7529 kPa (1092 PSI) | 193 kPa (28 PSI) |
| CONCRETE | Prefab Concrete | 102 kg (225 lb.) | 2213 kPa (321 PSI) | 241 kPa (35 PSI) |
| 276 kPa (40 PSI) FOAM | Prefab Concrete | 106 kg (234 lb.) | 2282 kPa (331 PSI) | 193 kPa (28 PSI) |
| 689 kPa (100 PSI) FOAM | Prefab Concrete | 135 kg (297 lb.) | 2923 kPa (424 PSI) | 241 kPa (35 PSI) |
| 689 kPa (100 PSI) FOAM | Polymer Pad | 134 kg (296 lb.) | 2910 kPa (422 PSI) | 241 kPa (35 PSI) |
| 689 kPa (100 PSI) FOAM | Gravel | 80 kg (177 lb.) | 1737 kPa (252 PSI) | 145 kPa (21 PSI) |
| 276 kPa (40 PSI) FOAM | Gravel | 54 kg (118 lb.) | 1158 kPa (168 PSI) | 165 kPa (24 PSI) |

**TABLE 5**

| **TENSILE STRENGTH** | | | | |
|---|---|---|---|---|
| **FOOTING** | **BOTTOM PAD** | **PEAK LOAD ON FOOTING** | **TENSILE STRENGTH OF FOOTING** | **SOIL COMPRESSIVE STRENGTH** |
| CONCRETE | Prefab Concrete | 20 kg (44 lb.) | 29 kg (63 PSI) | 13 kPa (28 PSI) |
| 276 kPa (40 PSI) FOAM | Polymer Pad | 27 kg (59 lb.) | 38 kg (84 PSI) | 13 kPa (28 PSI) |
| 689 kPa (100 PSI FOAM) | Polymer Pad | 44 kg (97 lb.) | 63 kg (138 PSI) | 13 kPa (28 PSI) |

Tables 6 and 7 give the compressive and tensile strength for the footings shown in Figure 7. The 689 kPa (100 psi) foam and the concrete are the footings that have been placed in the hole and extend above grade. The wood post is placed on top of the footing.

A footing pad was placed on top of the foam to spread the load across the entire surface of the foam. Without the pad, the foam would compress directly under the post when a load greater than the compressive strength of the foam was applied. Both the compressive and tensile strength of the 689 kPa (100 psi) foam footing was higher than for the concrete footing. The post was attached to the top of the footing with an anchor bolt.

**TABLE 6**

| **COMPRESSIVE STRENGTH** | | | |
|---|---|---|---|
| **FOOTING** | **PEAK LOAD** | **COMPRESSIVE STRENGTH OF FOOTING** | **SOIL COMPRESSIVE STRENGTH** |
| 689 kPa (100 PSI FOAM) | 233 kg (514 lb.) | 77 kg (170 PSI) | 193 (28 PSI) |
| CONCRETE | 193 kg (426 lb.) | 64 kg (141 PSI) | 172 (25 PSI) |

**TABLE 7**

| **TENSILE STRENGTH** | | | |
|---|---|---|---|
| **FOOTING** | **PEAK LOAD** | **TENSILE STRENGTH OF FOOTING** | **SOIL COMPRESSIVE STRENGTH** |
| 689 kPa | 35 kg (78 lb.) | 172 kPa (25 PSI) | 172 kPa (25 PSI) |
| CONCRETE | 31 kg (69 lb.) | 152 kPa (22 PSI) | 283 kPa (41 PSI) |

The polyurethane foam also provides an abrasive surface to increase friction against soil. This helps prevents movement of the footing through the soil.

## Claims

1. A foundation footing system (12, 16) for a load-bearing structure, the system comprising:
a hole (42, 52, 62) in a ground (40, 50, 60), the hole having a bottom and sides, and
a post (44, 54, 64) positioned in the hole and generally centered within the hole, wherein the post extends above the hole, wherein the width of the hole is wider than a width of the post thus forming a gap between sides of the post and the sides of the hole; and
a cured, closed-cell, polyurethane foam (46, 56, 66) surrounding the post, wherein the polyurethane foam fills the gap between the post and sides of the hole, the polyurethane foam comprising a cured mixture of a polyurethane composition comprising polyisocyanate, at least one active hydrogen containing compound, and a polysiloxane-polyalkylene oxide copolymer surfactant, wherein the cured, closed cell, polyurethane foam has a compressive strength of greater than 69 kPa (10 psi).

2. The foundation footing system of claim 1, wherein the cured, closed cell, polyurethane foam is prepared from mixing a polyurethane composition, pouring the composition into the hole, and allowing the composition to foam, wherein the polyurethane foam cures to touch in about 1 to 10 minutes after mixing the composition.

3. The foundation footing system of claim 1, wherein the cured, closed cell, polyurethane foam has a compressive strength of greater than 345 kPa (50 psi).

4. The foundation footing system of claim 1, wherein the polyurethane composition is hydrophobic.

5. The foundation footing system of claim 1, wherein the polyurethane foam further comprises at least one water-immiscible component in an amount from 10% to 80% by weight of the total composition.

6. The foundation footing system of claim 1, wherein the composition further comprises a hydrophobicity inducing surfactant in an amount from 0.1% to 5% by weight of the total composition.

7. The foundation footing system of claim 1, wherein the polysiloxane-polyalkylene oxide copolymer surfactant is a hydrophobicity inducing surfactant.

8. The foundation footing system of claim 1, wherein the post is positioned at the bottom of the hole.

9. A foundation footing system for a load-bearing structure comprising:
a hole (72, 82, 102) in a ground, the hole having a top, bottom, and sides;
a cured, polyurethane foam (76, 86, 106), wherein the foam fills the hole and extends above the top of the hole to form a foundation footing, the polyurethane foam comprising a cured mixture of a polyurethane composition comprising isocyanate, at least one active hydrogen containing compound, and a polysiloxane-polyalkylene oxide copolymer surfactant; and
a post (74, 84, 104) placed on and attached to the top of the foam and generally centered on the foam, or wherein at least a portion of the post is embedded within the foam wherein the cured polyurethane foam has a compressive strength of greater than 207 kPa (30 psi).

10. The foundation footing system of claim 9, wherein the composition further comprises the polysiloxane-polyalkylene oxide copolymer surfactant in an amount from 0.1% to 5% by weight of the total composition.

11. The foundation footing system of claim 1, wherein the cured, closed-cell, polyurethane foam has a compressive strength higher than 207 kPa (30 psi).

12. The foundation footing system of claim 1 or claim 9, wherein the cured, closed-cell, polyurethane foam has a compressive strength higher than 552 kPa (80 psi).

13. The foundation footing system of claim 1 or claim 9, wherein the cured, closed-cell, polyurethane foam has a compressive strength higher than 689 kPa (100 psi) and a density of higher than 100 kg/m³ (0.10 gm/cc).

14. The foundation footing system of claim 1 or claim 9, wherein the polyurethane foam is tack-free in 1 to 20 minutes after mixing the composition.

15. Use of a polyurethane composition
comprising polyisocyanate, at least one active hydrogen containing compound, and a polysiloxane-polyalkylene oxide copolymer surfactant to prepare a foundation footing system according to claim 1 or
comprising isocyanate, at least one active hydrogen containing compound, and a polysiloxane-polyalkylene oxide copolymer surfactant to prepare a foundation footing system according to claim 9.

## Patentansprüche

1. Fundamentgründungs-System (12, 16) für eine lasttragende Struktur, wobei das System umfasst:
ein Loch (42, 52, 62) in einem Untergrund (40, 50, 60), wobei das Loch einen Boden und Seiten aufweist, und
einen Pfahl (44, 54, 64), der in dem Loch positioniert und allgemein innerhalb des Loches zentriert ist, wobei der Pfahl sich oberhalb des Loches erstreckt, wobei die Breite des Loches weiter ist als eine Breite des Pfahls, so dass sich ein Spalt zwischen den Seiten des Pfahls und den Seiten des Loches bildet; und
einen gehärteten, geschlossenzelligen Polyurethanschaum (46, 56, 66), der den Pfahl umgibt, wobei der Polyurethanschaum den Spalt zwischen dem Pfahl und den Seiten des Loches füllt, wobei der Polyurethanschaum ein gehärtetes Gemisch einer Polyurethanzusammensetzung umfasst, die Polyisocyanat, mindestens eine Verbindung, die aktiven Wasserstoff enthält, und ein Polysiloxan-Polyalkylenoxid-Copolymer-Tensid umfasst, wobei der gehärtete, geschlossenzellige Polyurethanschaum eine Druckfestigkeit von mehr als 69 kPa (10 psi) aufweist.

2. Fundamentgründungs-System nach Anspruch 1, wobei der gehärtete, geschlossenzellige Polyurethanschaum durch Vermischen einer Polyurethanzusammensetzung, Gießen der Zusammensetzung in das Loch, und schäumen Lassen der Zusammensetzung hergestellt ist, wobei der Polyurethanschaum in etwa 1 bis 10 Minuten nach Vermischen der Zusammensetzung berührungsfest aushärtet.

3. Fundamentgründungs-System nach Anspruch 1, wobei der gehärtete, geschlossenzellige Polyurethanschaum eine Druckfestigkeit von mehr als 345 kPa (50 psi) aufweist.

4. Fundamentgründungs-System nach Anspruch 1, wobei die Polyurethanzusammensetzung hydrophob ist.

5. Fundamentgründungs-System nach Anspruch 1, wobei der Polyurethanschaum zudem mindestens einen mit Wasser nicht mischbaren Bestandteil in einer Menge von 10 bis 80 Gewichtsprozent der gesamten Zusammensetzung umfasst.

6. Fundamentgründungs-System nach Anspruch 1, wobei die Zusammensetzung zudem ein Hydrophobizität hervorrufendes Tensid in einer Menge von 0,1 bis 5 Gewichtsprozent der gesamten Zusammensetzung umfasst.

7. Fundamentgründungs-System nach Anspruch 1, wobei das Polysiloxan-Polyalkylenoxid-Copolymer-Tensid ein Hydrophobizität hervorrufendes Tensid ist.

8. Fundamentgründungs-System nach Anspruch 1, wobei der Pfahl am Boden des Loches positioniert ist.

9. Fundamentgründungs-System für eine lasttragende Struktur, umfassend:
ein Loch (72, 82, 102) in einem Untergrund, wobei das Loch ein oberes Ende, einen Boden und Seiten aufweist;
einen gehärteten Polyurethanschaum (76, 86, 106), wobei der Schaum das Loch füllt und sich oberhalb des oberen Endes des Loches erstreckt, um eine Fundamentgründung zu bilden, wobei der Polyurethanschaum ein gehärtetes Gemisch einer Polyurethanzusammensetzung umfasst, die Isocyanat, mindestens eine Verbindung, die aktiven Wasserstoff enthält, und ein Polysiloxan-Polyalkylenoxid-Copolymer-Tensid umfasst; und einen Pfahl (74, 84, 104), der auf dem oberen Ende des Schaumes platziert und daran befestigt und allgemein auf dem Schaum zentriert ist, oder wobei zumindest ein Abschnitt des Pfostens innerhalb des Schaumes eingebettet ist, wobei der gehärtete Polyurethanschaum eine Druckfestigkeit von mehr als 207 kPa (30 psi) aufweist.

10. Fundamentgründungs-System nach Anspruch 9, wobei die Zusammensetzung zudem das Polysiloxan-Polyalkylenoxid-Copolymer-Tensid in einer Menge von 0,1 bis 5 Gewichtsprozent der gesamten Zusammensetzung umfasst.

11. Fundamentgründungs-System nach Anspruch 1, wobei der gehärtete, geschlossenzellige Polyurethanschaum eine Druckfestigkeit aufweist, die höher ist als 207 kPa (30 psi).

12. Fundamentgründungs-System nach Anspruch 1 oder Anspruch 9, wobei der gehärtete, geschlossenzellige Polyurethanschaum eine Druckfestigkeit aufweist, die höher ist als 552 kPa (80 psi).

13. Fundamentgründungs-System nach Anspruch 1 oder 9, wobei der gehärtete, geschlossenzellige Polyurethanschaum eine Druckfestigkeit, die höher ist als 689 kPa (100 psi), und eine Dichte von höher als 100 kg/m³ (0,10 gm/cc) aufweist.

14. Fundamentgründungs-System nach Anspruch 1 oder Anspruch 9, wobei der Polyurethanschaum in 1 bis 20 Minuten nach Vermischen der Zusammensetzung klebefrei ist.

15. Verwendung einer Polyurethanzusammensetzung,
die Polyisocyanat, mindestens eine Verbindung, die aktiven Wasserstoff enthält, und ein Polysiloxan-Polyalkylenoxid-Copolymer-Tensid umfasst, um ein Fundamentgründungs-System nach Anspruch 1 herzustellen, oder
die Isocyanat, mindestens eine Verbindung, die aktiven Wasserstoff enthält, und ein Polysiloxan-Polyalkylenoxid-Copolymer-Tensid umfasst, um ein Fundamentgründungs-System nach Anspruch 9 herzustellen.

## Revendications

1. Système de semelles de fondation (12 ,16) pour une structure porteuse, le système comprenant :
un trou (42, 52, 62) dans une surface (40, 50, 60), le trou ayant une partie inférieure et des côtés,
et
un jalon (44, 54, 64) positionné dans le trou et généralement centré dans le trou, le jalon s'étendant au-dessus du trou, la largeur du trou étant plus large qu'une largeur du jalon formant ainsi un espace libre entre les côtés du jalon et les côtés du trou ; et
une mousse polyuréthane (46, 56, 66) à cellules fermées, durcie, entourant le jalon, la mousse polyuréthane remplissant l'espace libre entre le jalon et les côtés du trou, la mousse polyuréthane comprenant un mélange durci d'une composition de polyuréthane comprenant un polyisocyanate, au moins un composé contenant de l'hydrogène actif et un tensioactif de copolymère de polysiloxane-oxyde de polyalkylène, la mousse polyuréthane à cellules fermées, durcie, ayant une force de compression de plus de 69 kPa (10 psi).

2. Système de semelles de fondation selon la revendication 1, dans lequel la mousse polyuréthane à cellules fermées, durcie, est préparée en mélangeant une composition de polyuréthane, en versant la composition dans le trou et en laissant la composition mousser, la mousse polyuréthane durcissant au toucher en environ 1 à 10 minutes après le mélange de la composition.

3. Système de semelles de fondation selon la revendication 1, dans lequel la mousse polyuréthane, à cellules fermées, durcie, a une force de compression supérieure à 345 kPa (50 psi).

4. Système de semelles de fondation selon la revendication 1, dans lequel la composition de polyuréthane est hydrophobe.

5. Système de semelles de fondation selon la revendication 1, dans lequel la mousse polyuréthane comprend en outre au moins un composant immiscible dans l'eau en une quantité de 10 % à 80 % en poids de la composition totale.

6. Système de semelles de fondation selon la revendication 1, dans lequel la composition comprend en outre un tensioactif induisant de l'hydrophobie en une quantité de 0,1 % à 5 % en poids de la composition totale.

7. Système de semelles de fondation selon la revendication 1, dans lequel le tensioactif de copolymère polysiloxane-oxyde de polyalkylène est un tensioactif induisant de l'hydrophobie.

8. Système de semelles de fondation selon la revendication 1, dans lequel le jalon est positionné à la partie inférieure du trou.

9. Système de semelles de fondation pour structure porteuse comprenant : un trou (72 , 82, 102) dans une surface, le trou ayant une partie supérieure, une partie inférieure et des côtés ; une mousse polyuréthane (76, 86, 106) durcie, la mousse remplissant le trou et s'étendant au-dessus de la partie supérieure du trou pour former une semelle de fondation, la mousse polyuréthane comprenant un mélange durci d'une composition de polyuréthane comprenant un isocyanate, au moins un composé contenant de l'hydrogène actif et un tensioactif de copolymère polysiloxane-oxyde de polyalkylène ; et un jalon (74, 84, 104) placé sur et attaché à la partie supérieure de la mousse et généralement centré sur la mousse, ou au moins une partie du jalon est inclus dans la mousse la mousse de polyuréthane durcie ayant une force de compression supérieure à 207 kPa (30 psi).

10. Système de semelles de fondation selon la revendication 9, dans lequel la composition comprend en outre le tensioactif de copolymère polysiloxane-oxyde de polyalkylène en une quantité de 0,1 % à 5 % en poids de la composition totale.

11. Système de semelles de fondation selon la revendication 1, dans lequel la mousse polyuréthane à cellules fermées, durcie, a une force de compression supérieure à 207 kPa (30 psi).

12. Système de semelles de fondation selon la revendication 1 ou la revendication 9, dans lequel la mousse de polyuréthane à cellules fermées, durcie, a une force de compression supérieure à 552 kPa (80 psi).

13. Système de semelles de fondation selon la revendication 1 ou la revendication 9, dans lequel la mousse polyuréthane à cellules fermées, durcie, a une force de compression supérieure à 689 kPa (100 psi) et une densité supérieure à 100 kg/m³ (0,10 g/cc).

14. Système de semelles de fondation selon la revendication 1 ou la revendication 9, dans lequel la mousse polyuréthane est sans colle 1 à 20 minutes après le mélange de la composition.

15. Utilisation d'une composition de polyuréthane
comprenant un polyisocyanate, au moins un composé contenant de l'hydrogène actif et un tensioactif de copolymère polysiloxane-oxyde de polyalkylène pour préparer un système de semelles de fondation selon la revendication 1 ou
comprenant un isocyanate, au moins un composé contenant de l'hydrogène actif et un tensioactif de copolymère polysiloxane-oxyde de polyalkylène pour préparer un système de semelles de fondation selon la revendication 9.
